# EUROPÄISCHE PATENTSCHRIFT

(11) **EP 0 611 854 B1**
(45) Veröffentlichungstag und Bekanntmachung des Hinweises auf die Patenterteilung: **06.11.1996**
(21) Anmeldenummer: 94101854.1
(22) Anmeldetag: 08.02.1994
(51) Int. Cl.: E04F 13/14, E04B 2/96, E06B 3/54

(54) **Glasverbundplatte für Wand- und Gebäudeverkleidungen**
Composite glass plate for covering walls and buildings
Plaque stratifiée en verre pour le revêtement de parois et de bâtiments

(30) Priorität: 13.02.1993 DE 4304393
(43) Veröffentlichungstag der Anmeldung: 24.08.1994
(73) Patentinhaber: GLASWERKE ARNOLD GmbH & Co. KG, D-91732 Merkendorf (DE)
(72) Erfinder: Schreiner, Herbert, Dr.-Ing., D-91710 Gunzenhausen (DE)
(74) Vertreter: Dreiss, Fuhlendorf & Steimle Patentanwälte

(56) Entgegenhaltungen:
- EP-A- 0 344 486
- FR-A- 1 288 114
- FR-A- 2 649 441
- GB-A- 2 024 297
- US-A- 2 381 194
- US-A- 3 672 107

## Beschreibung

Die Erfindung betrifft eine Glasverbundplatte für Wand- und Gebäudeverkleidungen mit mindestens einer dickeren Glasplatte und mindestens einem dünneren Metallblech die über eine Kunststoffklebschicht miteinander verbunden sind, wobei das Metallblech und die Glasscheibe vorzugsweise etwa den gleichen Ausdehnungskoeffizienten aufweisen und der Glasverbund von einer Haltekonstruktion der Wand des Gebäudes bzw. einer Fensterkonstruktion gehalten ist, und wobei mindestens ein Rand des Metallblechs von der Flachseite der Glasverbundplatte her frei Zugänglich ist.

Eine solche Glasverbundplatte ist aus der EP-A-0 344 486 bekannt. Probleme bereitet das Anbringen solcher Glasverbundplatten an einer Fassade. In den USA erfolgt dies über Klebverbindungen. In den deutschen Bauvorschriften ist dies nur bedingt zulässig. Es wurde versucht vor dem Verbinden der Glasscheibe mit dem dünneren Metallblech an diesem Befestigungsmittel anzuschweißen. Beim anschließenden Zusammenfügen der Glasscheiben mit dem Metallblech entstehen im Bereich der angeschweißten Befestigungsmittel optisch unschöne Stellen, da im Bereich der Schweißstellen auf der Glasseite der Metallbleche sichtbare Veränderungen entstehen, die sich auch durch aufwendige Oberflächenbehandlungen nicht befriedigend beseitigen lassen. Auch die unterschiedlichen Elastizitätseigenschaften im Bereich der Befestigungsmittel bewirken, daß beim Zusammenfügen der Glasscheiben mit dem Metallblech dort optisch unterschiedlich wirkende Bereiche entstehen. Außerdem wird durch die angeschweißten Befestigungsmittel das Zusammenfügen des Metallblechs mit der Glasscheibe erschwert, ein gleichmäßiges aufkaschieren ist hier nicht möglich mit der Folge, daß die Klebstoffschicht, unterschiedlich dick, optisch anders aussehende Stellen verursacht. Zudem ist bei Doppelverglasungen die Herstellung des Randverbundes nicht oder nur sehr erschwert möglich.

Aus der DE-A-38 37 701 ist es bekannt Halteelemente mit einer Glasscheibe zu verbinden, wobei zur Erhöhung der Festigkeit der Klebeverbindung die Glasscheibe mit Bohrungen versehen ist in die die Klebemasse eindringt um so praktisch eine formschlüssige Verbindung zu erhalten.

Aus der GB-A-2 024 297 ist es bekannt, den Rand oder die Ränder einer Glasscheibe mit einer im Querschnitt U-förmigen Schiene zu umfassen an der Befestigungsbolzen für die Scheibenbefestigung angeschweißt sind. Reine Glasfassaden ohne von außen sichtbare Befestigungsmittel sind hiermit nicht realisierbar.

Aus der US-A-4 307 551 sind Glasverbundplatten für Wandverkleidungen bekannt bei denen im Randbereich der Glasplatte Profilschienen aufgeklebt sind, die ihrerseits dann zur Wandmontage in besondere Halter einhängbar bzw. einschiebbar sind. Die dort gezeigten Scheiben sind nicht durchsichtig, so daß die Klebeverbindung von der Sichtseite her nicht erkennbar ist. Transport, Lagerung und die Herstellung der Klebeverbindung sind relativ aufwendig. Die hierzu erforderlichen Vorrichtungen erfordern relativ große Abmessungen.

Aus der US-A-2,381,194 ist eine als Fensterscheibe zu verwendende Isolierglasscheibe bekannt geworden, auf deren nach innen gewandtem randseitigem Bereich umlaufend eine Metallbeschichtung aufgesprüht ist, die als lötfähige Oberfläche bzw. Verbindungsschicht für einen metallischen Abstandshalter zwischen dieser äußeren Glasscheibe und einer inneren Glasscheibe dient. Die Isolierglasscheibe ist vom Aufbau her sehr aufwendig und erfordert zusätzliche Mittel zur Anordnung an einem Rahmen; sie ist für sehr spezielle Einsatzzwecke bei Flugzeugen konzipiert.

In Vermeidung der geschilderten Nachteile liegt der vorliegenden Erfindung die Aufgabe zugrunde, eine Glasverbundplatte zu schaffen, die eine optisch gleichmäßige Gebrauchsseite aufweist und mit geringem Herstellungsaufwand rationell herstellbar ist.

Zur Lösung dieser Aufgabe sieht die Erfindung vor, daß auf dem Rand des Metallblechs nach dem Verbinden der Glasscheibe mit dem Metallblech Befestigungsmittel wie Stehbolzen, Schrauben aus Metall durch Schweißen befestigt sind.

Dadurch, daß die Verschweißung erst nach dem Verbinden der Glasscheibe mit dem Metallblech durchgeführt wird, kann eine Oberflächenveränderung und damit eine optische Beeinträchtigung weitgehend vermieden werden. Die Verbindung Glasscheibe-Metallblech kann ohne Behinderung von Befestigungsmitteln über die gesamte Verbindungsfläche besonders gleichmäßig hergestellt werden. Die Dicke der Kunststoffklebschicht kann besonders einfach absolut genau eingehalten werden, wenn eine oder auch mehrere Lagen Folie verwendet und das Metallblech zusammen mit dieser Folie oder diesen Folien auf die Glasscheibe aufkaschiert werden und zwar bei erhöhter Temperartur unter Druck.

Die Befestigungsmittel können mit relativ einfachen platzsparenden Vorrichtungen rationell weitgehend vollautomatisch mit dem Metallblech verbunden werden.

Falls als Metallblech nur Metallstreifen Verwendung finden können diese von einer Vorratsrolle aus direkt zur Verbindung mit der Glasscheibe abgezogen und aufgewalzt werden. Die Lagerhaltung und Bevorratung bedingt einen optimal geringen Aufwand.

Als Folien haben sich insbesondere Polyvinylbutyral-(PVB) oder Polyurethan-(PU) Folien bewährt. Die Dicke einer Folienschicht beträgt vorzugsweise etwa 0,4 Millimeter.

Besonders vorteilhaft kann die Glasverbundplatte als Brüstungsscheibe ausgebildet sein bestehend aus einer dicken Glasscheibe und einem gleich großen dünneren Metallblech, wobei randnah am Metallblech die Haltemittel zur Befestigung der Glasverbundplatte über eine Haltekonstruktion an der Wand vorgesehen sind.

Eine besonders sichere Befestigung kann dadurch ermöglicht werden, daß eine der Glasscheiben einen überstehenden Rand aufweist und daß mindestens auf ihrer randinneren Seite das bandförmige Metallblech befestigt und anschließend die Befestigungsmittel angeschweißt sind.

Zur einfachen rationellen Herstellung kann das dünne Metallblech zusammen mit einer Folie unter Wärme und Druck auf eine Seite der Glasscheibe aufkaschiert werden vorzugsweise durch Walzen um so den Einschluß von Gasblasen zu vermeiden und einem anschließenden Autoklavenprozeß um dann nachfolgend an den vorgesehenen Stellen Befestigungsmittel auf das dünne Metallblech aufzuschweißen, vorzugsweise durch Widerstandsschweißen, wobei die Dauer der Strombeaufschlagung, die Stromstärke, der zeitliche Verlauf der Stromstärke und die Zeitdauer und Größe der Druckbelastung des Haltemittels beim Schweißen, durch Vorversuche festgelegt, vorgegeben werden.

Besonders wichtig für den Erhalt einer optisch einwandfreien Oberfläche ist die Aufrechterhaltung eines gewissen Anpressdrucks nach dem Schweißvorgang, wobei hier die Abkühlung der Schweißstelle noch unter Druck erfolgen muß. Durch die Aufrechterhaltung des Drucks erfolgt auch ein wesentlich verbesserter Wäremabfluß.

Weitere erfindungsgemäße Ausbildungen sind den Unteransprüche zu entnehmen und werden mit ihren Vorteilen anhand der beigefügten Zeichnungen in der nachstehenden Beschreibung näher erläutert. Es zeigt:
- Figur 1: eine Teilansicht einer Brüstungsscheibe;
- Figur 2 und 3: entsprechende Teilansichten von Isolierglasscheiben unterschiedlicher Ausführungsformen;
- Figur 4: eine zwei Metallblechstreifen aufweisende Verbundscheibe.

Bei den drei dargestellten Ausführungsbeispielen werden für die entsprechenden Teile die gleichen Bezugszeichen verwendet.

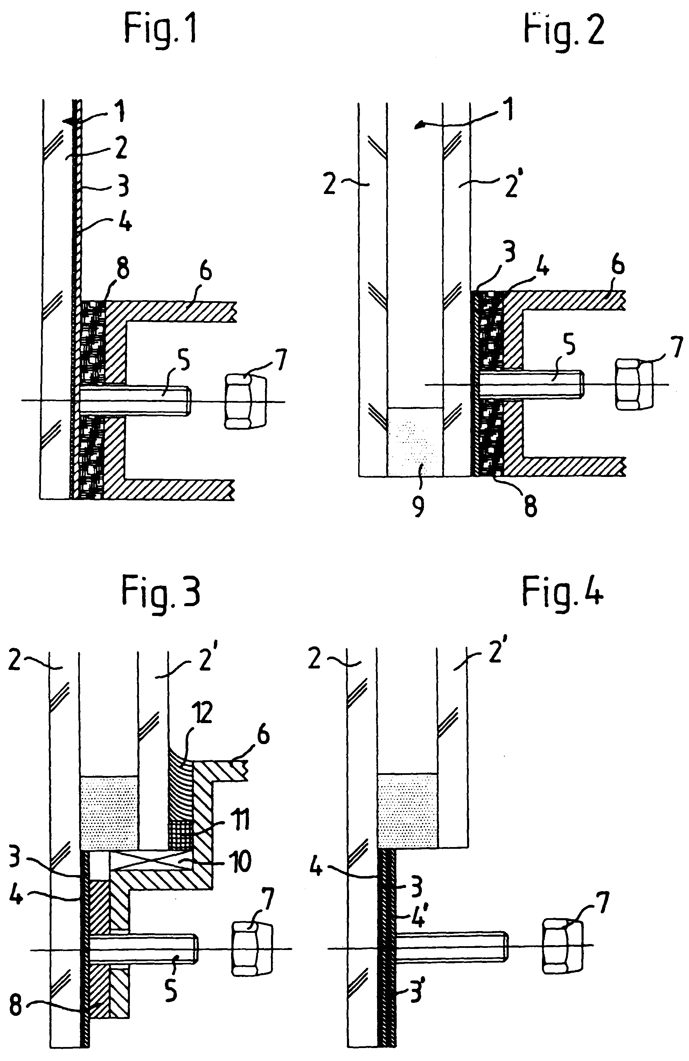

Die in Figur 1 dargestellte Brüstungsscheibe wird durch eine Glasverbundplatte 1 gebildet, die eine Glasscheibe 2 und ein wesentlich dünneres Metallblech 3 aufweist die über eine Kunststoffklebschicht 4 vorzugsweise aus Polyvinylbutyral (PVB) oder Polyurethan (PU) besteht. Im Randbereich sind auf dem Metallblech 3 Befestigungsmittel 5 in Form von Stehbolzen, Schrauben oder dergleichen aufgeschweißt. Über diese Befestigungsmittel 5 wird die Glasverbundplatte 1 an einer Haltekonstruktion 6 einer Gebäudefassade oder sonstigen Wand gehalten. Als Befestigungsmittel 5 können Gewindebolzen mit Muttern 7 aber auch sonstige bekannte Befestigungsmittel wie Tannenbaumklipse dienen, die besonders einfach und rasch montierbar sind und doch sicher halten. Zwischen der Glasverbundplatte 1 und der Haltekonstruktion 6 ist zum Toleranzausgleich und zur nachgiebigen Befestigung ein elastisches Trennprofil 8 vorgesehen.

Der Ausdehnungskoeffizient der Glasscheibe 2 und das mit ihr zusammen kaschierte Metallblech 3 weisen etwa den gleichen Audehnungskoeffizienten auf, so daß auch bei stark schwankenden Temperaturen Spannungen in der Glasverbundplatte 1 vermieden werden. Das Metallblech 3 ist vorzugsweise aus nicht rostendem Stahl. Durch eine pollierte Oberfläche erhält man so praktisch einen Spiegel wie in Figur 1 dargestellt. Die Glasverbundplatte 1 dient als Brüstungsscheibe zur Vollverglasung von Gebäudefronten.

In den Figuren 2 und 3 sind Isolierglasscheiben dargestellt mit zwei über Abstandhalterahmen 9 verbundene Glasscheiben 2, 2'. Auch hier ist im Bereich des Scheibenrands, entweder auf zwei gegenüberliegenden Seiten oder umlaufend, ein Metallblech 3 aufkaschiert und über Befestigungsmittel 5 an der Haltekonstruktion (Fassadenbauteil oder Fensterkonstruktion) 6 befestigt. Beim Ausführungsbeispiel der Figur 3 ist die Scheibe 2 größer ausgebildet als die Scheibe 2' und der Streifen aus Metallblech 3 ist auf der Innenseite des überstehenden Rands aufkaschiert. Die Haltekonstruktion 6 selbst ist abgewinkelt. Die Scheibe 2' ist über eine Verklotzung 10, ein Vorlageband 11 und eine statische Verklebung 12 dicht gehalten und über Befestigungsmittel 5 gesichert.

Die Verbindung der Glasscheibe 2 bzw. 2' mit dem Metallblech 3 erfolgt durch Auflegen der Klebstoffschicht 4 in Form einer Folie oder eines Folienstreifens und Aufwalzen des Metallblechs 3 unter Erhitzung und Anpressung. Durch das Aufwalzen werden eventuelle Luftblasen herausgewalzt, so daß eine vollständig blasenfreie Verbindung erzielt werden kann. Danach erfolgt der Autoklavenprozeß. Erst nach dem Aufkaschieren des Metallblechs 3 werden durch Schweißen die Befestigungsmittel 5 im Randbereich mit dem Metallblech 3 verbunden. Dabei muß die Dauer der Strombeaufschlagung, die Stromstärke, der zeitliche Verlauf der Stromstärke, die Höhe und der zeitliche Verlauf der Druckbelastung in einem relativ engen, durch Vorversuche für den Einzelfall bestimmte, Wertebereiche eingehalten werden. Nur so kann erreicht werden, daß keine optische Beeinträchtigung im Bereich der Schweißstellen auf der den Befestigungsmitteln 5 gegenüberliegenden Seite entstehen die durch Glasscheibe 2 bzw. 2' hindurch sichtbar wären. Man kann so eine gleichmäßige Spiegeloberfläche erzielen. Bei gleichzeitiger sicherer Scheibenbefestigung an der Haltekonstruktion 6.

In Figur 4 ist eine Verbundscheibe dargestellt mit einer randüberstehenden Scheibe 2, auf der zwei Streifen Metallblech 3,3' unter Zwischenlage von Klebstoffschichten 4,4' aufkaschiert sind. Entsprechend wie bei den anderen dargestellten Ausführungsbeispielen sind auf dem Metallblech 3' im Abstand Befestigungsmittel 5 nach dem Aufkaschieren der Metallbleche 3,3' aufgeschweißt. Bei dieser Konstruktion können auch im Durchmesser relativ große Befestigungsmittel 5 ohne optische Beeinträchtigung aufgeschweißt werden, so daß auch hohe wechselnde Kräfte sicher übertragen werden können.

## Patentansprüche

1. Glasverbundplatte für Wand- und Gebäudeverkleidung mit mindestens einer dickeren Glasscheibe (2, 2') und mindestens einem dünneren Metallblech (3) die über eine Klebstoffschicht (4) miteinander verbunden sind, wobei das Metallblech (3) und die Glasscheibe (2, 2') vorzugsweise etwa den gleichen Ausdehnungskoeffizienten aufweisen und der Glasverbund auf einer Haltekonstruktion oder Fensterkonstruktion (6) an der Wand des Gebäudes gehalten ist, wobei mindestens ein Rand des Metallblechs (3) von der Flachseite der Glasverbundplatte (1) her frei zugänglich ist, **dadurch gekennzeichnet**, daß auf diesem Rand nach dem Verbinden der Glasscheibe (2 bzw. 2') mit dem Metallblech (3) Befestigungsmittel (5) wie Stehbolzen, Schrauben aus Metall befestigt sind.

2. Glasverbundplatte nach Anspruch 1, dadurch gekennzeichnet, daß die Kunststoffklebschicht durch mindestens eine Folie gebildet ist.

3. Glasverbundplatte nach Anspruch 2, dadurch gekennzeichnet, daß die Folie aus Polyvinylbutyral (PVB) oder Polyurethan (PU) besteht.

4. Glasverbundplatte nach Anspruch 2 oder 3, dadurch gekennzeichnet, daß die Dicke einer Folienschicht etwa 0,4 Millimeter beträgt.

5. Glasverbundplatte nach einem der Ansprüche 1 bis 4, dadurch gekennzeichnet, daß mindestens die der Glasscheibe (2 bzw. 2') zugeordnete Seite des Metallblechs (3) eine gleichmäßige Oberfläche aufweist, vorzugsweise polliert ist und zusammen durch die Glasscheibe (2 bzw. 2') hindurch als Spiegel wirkt.

6. Glasverbundplatte nach einem der Ansprüche 1 bis 4, dadurch gekennzeichnet, daß zwei Metallbleche (3,3') bzw. Metallblechstreifen (3,3') mit einer Glasscheibe zusammenkaschiert sind (Figur 4).

7. Glasverbundplatte nach einem der Ansprüche 1 bis 5, dadurch gekennzeichnet, daß sie als Brüstungsscheibe ausgebildet ist, eine dicke Glasscheibe (2) und ein gleich großes Metallblech (3) aufweist und daß randnah am Metallblech (3) Befestigungsmittel (5) vorgesehen sind (Figur 1).

8. Glasverbundplatte nach einem der Ansprüche 1 bis 5, dadurch gekennzeichnet, daß sie aus mindestens zwei durch einen Abstandhalterrahmen (9) verbundene Glasscheiben (2, 2') aufweist und daß an mindestens zwei Randseiten auf der außenliegenden Glasscheibe (2') ein bandförmiges Metallblech (3) aufkaschiert ist und danach am Metallblech (3) die Befestigungsmittel (5) angeschweißt sind.

9. Glasverbundplatte nach einem der Ansprüche 1 bis 5, dadurch gekennzeichnet, daß eine der Glasscheiben (2) einen überstehenden Rand aufweist und daß mindestens auf einer randinneren Seite das bandförmige Metallblech (3) vorgesehen ist (Figur 3).

10. Verfahren zur Herstellung einer Glasverbundplatte nach einem der Ansprüche 1 bis 8, dadurch gekennzeichnet, daß das dünne Metallblech (3) zusammen mit einer Folie, z.B. Klebstoffschicht (4), unter Wärme und Druck auf eine Seite der Glasscheibe (2 bzw. 2') aufkaschiert wird, vorzugsweise durch Aufwalzen und einen Autoklavenprozeß , das dann an den vorgesehenen Stellen Befestigungsmittel (5) auf das dünne Metallblech (3) aufgeschweißt werden, vorzugsweise mittels Widerstandsschweißen, wobei die Dauer der Strombeaufschlagung, die Stromstärke, der zeitliche Verlauf der Stromstärke und die Höhe und Zeit der Druckbelastung des Haltemittels (5), durch Vorversuche festgelegt, vorgegeben werden.

## Claims

1. A laminated glass panel for wall and building facings having at least one relatively thick glass pane (2, 2') and at least one relatively thin metal sheet (3) which are joined together by means of a plastic adhesive layer (4), the metal sheet (3) and the glass pane (2, 2') preferably having approximately the same expansion coefficients, the panel being supported on a supporting structure or window structure (6) in the wall of the building, at least one edge of the metal sheet (3) being freely accessible from the flat face of the panel (1), **characterised in that** securing means (5) such as stud bolts or screws of metal are fixed to the said one edge by welding after the glass pane (2 or 2' respectively) has been joined to the metal sheet (3).

2. A laminated panel as claimed in Claim 1, characterised in that the plastic adhesive layer is comprised of at least one film.

3. A laminated panel as claimed in Claim 2, characterised in that the film is comprised of polyvinyl butyral (PVB) or polyurethane (PU).

4. A laminated panel as claimed in either of Claims 2 or 3, characterised in that one film layer has a thickness of approximately 0.4 millimetres.

5. A laminated panel as claimed in any of Claims 1 to 4, characterised in that at least that side of the metal sheet (3) which is directed towards the glass pane (2 or 2' respectively) has a uniform surface, which preferably is polished and acts as mirror through the glass pane (2 or 2' respectively).

6. A laminated panel as claimed in any of Claims I to 4, characterised in that two metal sheets (3,3') or sheet-metal strips (3,3') are adhered to one glass pane (Fig. 4).

7. A laminated panel as claimed in any of Claims 1 to 5, characterised in that it is designed as parapet pane, having a thick glass pane (2) and an equally sized metal sheet (3), and in that securing means (5) are provided near the edge of the metal sheet (3) (Fig. 1).

8. A laminated panel as claimed in any of Claims 1 to 5, characterised in that it comprises at least two glass panes (2, 2') with a distance frame (9) and in that a strip-shaped metal sheet (3) is adhered to the outer glass pane (2') on at least two edge sides, the securing means (5) then being welded onto the metal sheet (3).

9. A laminated panel as claimed in any of Claims 1 to 5, characterised in that one of the glass panes (2) has a projecting edge and in that the strip-shaped metal sheet (3) is provided on at least one inside edge thereof.

10. A method for the fabrication of a laminated panel as claimed in any of claims 1 to 8, characterised in that the thin metal sheet (3) is adhered to one side of the glass pane (2 or 2' respectively) under heat and pressure, by means of a film, e.g. an adhesive layer (4), preferably by rolling and using an autoclave process and in that securing means are then welded to the thin metal sheet (3) at the places provided, preferably by resistance welding, the period of current application, the current intensity, the distribution of the current intensity over time and the magnitude and period of the compressive load on the securing means (5) being determined by preliminary tests.

## Revendications

1. Plaque sandwich en verre pour le revêtement de parois et de bâtiments se composant au moins d'une vitre (2, 2') assez épaisse et au moins d'une tôle métallique (3) plus mince qui sont reliées l'une à l'autre par une couche d'adhésif (4), où la tôle métallique (3) et la vitre (2, 2') ont, de préférence, sensiblement le même coefficient de dilatation, et où le matériau composite en verre est maintenu sur une construction support ou sur une construction de fenêtre (6), sur le mur d'un bâtiment, où au moins un bord de la tôle métallique (3) est accessible librement par le côté plat de la plaque sandwich en verre (1),
caractérisée en ce que des moyens de fixation (5) tels que des boulons filetés, des vis métalliques sont fixés sur ce bord après l'assemblage de la vitre (2 ou 2') avec la tôle métallique (3).

2. Plaque sandwich en verre selon la revendication 1, caractérisée en ce que la couche d'adhésif est formée au moins par une feuille.

3. Plaque sandwich en verre selon la revendication 2, caractérisée en ce que la feuille est en butyral polyvinylique (PVB) ou en polyuréthane (PU).

4. Plaque sandwich en verre selon la revendication 2 ou 3, caractérisée en ce que l'épaisseur d'une couche en feuille est de 0,4 millimètre environ.

5. Plaque sandwich en verre selon l'une quelconque des revendications 1 à 4, caractérisée en ce que au moins le côté de la tôle métallique (3), tourné vers la vitre (2 ou 2'), présente une surface régulière, de préférence polie, et qu'il serve en même de temps de miroir grâce à la vitre (2 ou 2').

6. Plaque sandwich en verre selon l'une quelconque des revendications 1 à 4, caractérisée en ce que deux tôles métalliques (3, 3') ou bandes de tôles métalliques (3, 3') sont plaquées avec une vitre (figure 4).

7. Plaque sandwich en verre selon l'une quelconque des revendications 1 à 5, caractérisée en ce qu'elle est configurée comme un contre-vitrage, qu'elle présente une vitre épaisse (2) et une tôle métallique (3) de même dimension et que des moyens de fixation (5) sont prévus près du bord de la tôle métallique (3) (figure 1).

8. Plaque sandwich en verre selon l'une quelconque des revendications 1 à 5, caractérisée en ce qu'elle se compose au moins de deux vitres (2, 2') reliées par un cadre (9) formant entretoise, et en ce qu'une tôle métallique (3) en forme de bande est plaquée sur la vitre (2') donnant vers l'extérieur, au moins au niveau de deux bords latéraux, les moyens de fixation (5) étant ensuite soudés sur la tôle métallique (3).

9. Plaque sandwich en verre selon l'une quelconque des revendications 1 à 5, caractérisée en ce que l'une des vitres (2) présente un bord en saillie et en ce que la tôle métallique (3) en forme de bande est prévue au moins sur le côté intérieur du bord (figure 3).

10. Procédé de fabrication d'une plaque sandwich en verre selon l'une quelconque des revendications 1 à 8, caractérisé en ce que la mince tôle métallique (3), associée à une feuille, par exemple une couche d'adhésif (4), est plaquée sur un côté de la vitre (2 ou 2') par un processus thermique et sous pression, de préférence par laminage et par autoclavage, en ce que des moyens de fixation (5) sont ensuite soudés, aux endroits prévus, sur la mince tôle métallique (3), de préférence par un processus de soudage électrique par résistance, où la durée de la charge de courant électrique, l'intensité du courant, les variations dans le temps de l'intensité du courant, l'ampleur et la durée de la charge de pression du moyen de fixation (5) sont prédéterminées et fixées par des essais préliminaires.
